# EUROPEAN PATENT APPLICATION

(11) **EP 2 960 902 A1**
(43) Date of publication of application: **30.12.2015**
(21) Application number: 14305989.7
(22) Date of filing: 24.06.2014
(51) Int. Cl.: G10L 17/22, G10L 15/30

(54) **Method for multifactor authentication of a user**

(71) Applicant: Orange, 75015 Paris (FR)
(72) Inventor: Leveque, Laurent, London W41PQ (GB); Bertrand, Romain, London SW2 5BE (GB)

(57) **Abstract**

Present system relates to a method for authenticating a user request to access a resource on a server from an electronic device, the user being identified by an ID, a user profile and dynamic data being associated to the ID, the user profile comprising a voice signature, the method being executed by the server and comprising the steps of receiving from an electronic device a request to access the resource, the request comprising the ID, retrieving the user profile and dynamic data associated to the received ID, determining a challenge from the retrieved dynamic data, the challenge comprising a first and a second part, presenting the first part of the challenge to the user, receiving an audio content and when a voice signature of the audio content corresponds to the voice signature of the retrieved user profile and when the audio content, decoded through a voice recognition system, corresponds to the second part of the challenge, granting access to the resource.

## Description

### FIELD OF THE PRESENT SYSTEM:

The present invention relates generally to systems, methods and processes for computer and network security. More particularly, the present invention relates to a method for authenticating a user request to access a resource.

### BACKGROUND OF THE PRESENT SYSTEM:

Illegitimate accesses to online services or systems are the origin of frauds representing a huge amount of money each year. To mitigate such risk, online services rely on user authentication methods. Most often, a user of an online service is requested to create an user identification (ID) and a password for authentication purpose. Security and confidence in the authentication may be improved by enforcing security rules such as length or complexity of the password.

More robust methods have been developed such as multi-factor authentication. Multi-factor authentication is an approach to authentication which requires the presentation with the user identification of two or more of the three authentication factors:
- a knowledge factor *("something only the user knows",* in other word a password),
- a possession factor *("something only the user has",* in other word a device or token), and
- an inherence factor *("something only the user is",* in other words, biometrics parameters).

After presentation, each factor must be validated by the online service for authentication to occur.

The document US 20110246196 discloses a triple authentication factor method comprising the use of voice biometrics technologies such as a voice signature to propose a high confidence on the access security for a user.

A voice signature or voice profile is a unique identifier of someone's voice. It can be based on physical, lexical and prosodic factors, as well the accent, age and sex of speaker. If the channel used for recording the speaker's voice is always the same, the channel's characteristics can also be taken into account, as well as any other factor that is relevant.

In order to gather and use personalised voice signatures, one has to know what exactly a voice signature would capture. The aim of a voice signature is to capture several distinct characteristics of speech, which vary between speakers. We can define these characteristics as the factors used by humans to discriminate between speakers. These are the physical, lexical and prosodic factors, as well as the accent of the speaker, which all contribute to build a more efficient voice signature. The physical aspect of the speech is bound to the age and sex, while the accent represents the differences in pronunciation due to geographical origin, social factors or the native language of the speaker. The other factors rely more on the understanding of the speaker. The lexical peculiarities are used to categorise the different kind of words used and the prosodic aspect defines the speaking rate and emotional state of the speaker. These aspects are not all useful for all kinds of application. For instance, as far as text to speech is concerned, the lexical peculiarities of the user are not relevant, but they are very useful for automatic speech recognition. On the other hand, prosodic factors do not improve speech recognition, but help to improve the naturalness of synthesised voice. In addition, there are other aspects of speech recording that are not determined by the speaker but are important to capture as they might vary between speakers in a predictable manner. These are the channel effects caused by the microphone used, the level of the background noise and the encoding rate.

Nevertheless, such advanced technology is vulnerable to simple replay attack, using a basic recording system.
More generally, it should be considered that the main weakness of any authentication method is generally the user itself as the successes of social engineering techniques demonstrate it quite often.

### SUMMARY OF THE PRESENT SYSTEM:

It is an object of the present system to overcome disadvantages and/or make improvements in the prior art.

Present system discloses a method for authenticating a user request to access a resource on a server from an electronic device, the user being identified by an ID, a user profile and dynamic data being associated to the ID, the user profile comprising a voice signature, the method being executed by the server and comprising the steps of receiving from an electronic device a request to access the resource, the request comprising the ID, retrieving the user profile and dynamic data associated to the received ID, determining a challenge from the retrieved dynamic data, the challenge comprising a first and a second part, presenting the first part of the challenge to the user, receiving an audio content and when a voice signature of the audio content corresponds to the voice signature of the retrieved user profile and, when the audio content, decoded through a voice recognition system, corresponds to the second part of the challenge, granting access to the resource.

Such method permits to combine a double factor authentication method with a dynamic generation of the challenge. Indeed, the user only needs to memorize its associated ID to access the resource. From the ID, the system generates a challenge, that is to say a question and answer, from the dynamic data associated to the user. Instead of memorizing a password, which are quite often very complex and difficult to remember, especially with the increasing number of passwords to memorize, the user needs to answer correctly to the question - the first part of the challenge - presented by the system.

By receiving the answer to the question as an audio content, the method allows, in the same step the user answers the question, that is to say hiding any complexity to the user or without any further action from the user, to add a highly secure layer of security by checking the voice signature, that is to say a biometric parameter. As the challenge is dynamically generated, no replay attack, using a recorded answer to a previous challenge is possible.

It is also to be noted that tools quite often used for gaining fraudulent access such as key loggers are totally ineffective with present system.

In one embodiment of present system, the dynamic data comprises data updated by the user.

This permits to generate challenges that quite probably only the user may answer. indeed, by using data updated by the user, either data directly entered by the user, for example an appointment in an agenda application, or indirectly updated by the user, for example a phone call generated or received by the user within a call log application. Thus, the first part of the challenge, that is to say the question, may be like "who did you call yesterday morning?". This embodiment permits personalized challenges and a continuous renewal of challenges.

In a further complementary embodiment of present system, the dynamic data comprises data associated to at least a second user of the resource.

Dynamic data associated to a user may be updated by others users of the resources. This is typically the case when the resource is a social network, and when the users are linked together. This embodiment allows improving the challenges by using more data than only data updated by the user, strengthening the scope of the challenges and the difficulty for an attacker to solve a challenge. For example, if a user A is linked with a user B on a social network, and if user B posted some photos of its holidays in Spain the week before, the challenge first part could be "where did B go last week?".

In an alternative embodiment of present system, the user profile comprises an identifier of a channel, the first part of the challenge being presented to the user via the identified channel.

The method can be strengthened by adding a third authentication factor, here a possession factor. Indeed, the identifier of a channel is typically a phone number. Thus, the first part of the challenge, that is to say the question, may be presented to the user by calling - using text to speech techniques - or sending a short message to the phone number of the user. Only the legitimate user may then receive the question, unless the phone device has been stolen, which is adding to the complexity for a fraud. Moreover, if illegitimate accesses to the resource attempt are made using the user ID, the user is informed of these attempts when receiving unexpected calls or short messages on its phone.

In a complementary embodiment of present system, the channel is a voice channel and a voice prompt to record the audio content is presented to the user after the presentation of the first part of the challenge.

The user may directly record its answer to the question after listening to the question presented by a call. Indeed, a voice prompt may explain that a request to a resource was received, that the user shall answer a question to authenticate itself, then ask the determined question via a text to speech technique and collect the answer directly during the same phone call. This is improving the usability and easiness of the solution for the user.

In an alternative embodiment of present system, the user profile comprises an identifier of a channel and the method further comprises a step of checking that the audio content is received through the identified channel.

Alternatively, when the first part of the challenge - the question - is presented via a text message or any other channel, the answer may be collected by asking the user to phone a certain phone number specifically from a known phone number corresponding to the identifier of the channel. Thus, the third possession factor authentication is obtained, strengthening the security of the authentication method. From a cost point of view, this embodiment prevents the service provider of the resource to make call to the users, limiting the operating cost of the service.

Another object of the invention is a server with means for executing the steps of the method for authenticating a user request to access a resource on a server from an electronic device, the user being identified by an ID, a user profile and dynamic data being associated to the ID, the user profile comprising a voice signature disclosed in present document.

Another object of the invention concerns a computer program or application software, in particular computer programs on or in a non-transitory computer readable medium, suitable for authenticating a user request to access a resource as disclosed in present document. These programs can use any programming language, and be in the form of source code, binary code, or of code intermediate between source code and object code such as in a partially compiled form, or in any other desirable form for implementing the methods according to the invention.

The information medium may be any entity or device capable of storing the software. For example, the medium can comprise a storage means, such as a ROM, for example a CD/DVD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary system comprising a server and electronic devices according to one embodiment of present system;
FIG. 2 show an exemplary embodiment of present system using a two or three factor based authentication.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well-known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements.

In particular, it shall be chosen for illustration purpose that the resource is a social networking service. Indeed, social networks are particularly adapted to an implementation of present system as they do integrate lots of data or personal information related to the users, which is allowing a determination of quite pertinent challenges. Nevertheless, the resource may not be a social network. The system may moreover be implemented based on a dedicated authentication server, the dedicated authentication server managing the accesses to various resources.

A social networking service (in short, a social network) is a platform to build social networks or social relations among users who share interests, activities, backgrounds or real-life connections. A social network consists of a representation of each user (a user profile), his social links and a variety of additional services. Social networks are quite often web-based services that allow individuals to create a public profile, to create a list of users with whom to share connection and view and cross the connections within the system. User may share information publicly or only with limited users (linked or connected user). Such information is commonly input via a web interface or a dedicated application for the social network

A user profile on a social network typically comprises information entered by a user when creating the user access on the social network. Such information comprises for example, first name, last name, age, postal address, personal tastes, e-mail address, phone number, etc. Some of this information may be shared publicly as to create the public profile. The user profile is associated to an ID.

In present embodiment of the system, a voice signature of the user is associated to a user profile. Such voice signature may be provided directly by the user, according to a predefined format, or the user may, for example when creating its user profile, provide a recorded audio content to the server 100. Indeed, the user profile creation process may comprise a step of recording the user reading a predefined text. The server 100 can calculate from this audio content a voice signature for the user and associate such voice signature to the user ID. In another embodiment, several voice signatures may be associated to a same user profile. Each voice signature may correspond to the same user in different conditions (when whispering, talking, shouting, talking in English, in French or any languages, etc.). Complementarily, the different voice signature may correspond to different users' voices when the same ID to access the social network is shared between different users.

Dynamic data shall designate hereafter any data either directly sent or shared on the social network by a first user, or posted by others users of the social network linked to the first user. Thus, dynamic data comprise information entered by the first user or by any other user linked with the first user. Depending on the social network or the way information is shared on the social network, dynamic data associated to a first user may comprise information shared by a second user directly linked to the first user or information shared by a second user indirectly linked to the first user, that is to say that the first and second user may be connected through at least another third user.

In other words, dynamic data is all the information accessible to a user connected to the social network. As a user is identified on the social network by an ID, dynamic data is the information available when connected on the social network with the ID (in short, dynamic data associated to an ID). More generally, the dynamic data may be any data that vary in time, known to the user, i.e. associated in a database to the user, i.e. his user ID. Such data, as explained here after, allows the present system to build a dynamic challenge that may change other time, thereby allowing a more robust authentication to access the resource.

For example, depending on the embodiment of present system, dynamic data may comprise call log of a smartphone used by the user, entries of an agenda application executed by an electronic device used by the user, short messages or e-mails received or sent by the user.

Users may post or share any type of information on a social network (text, photos, video, audio ...).

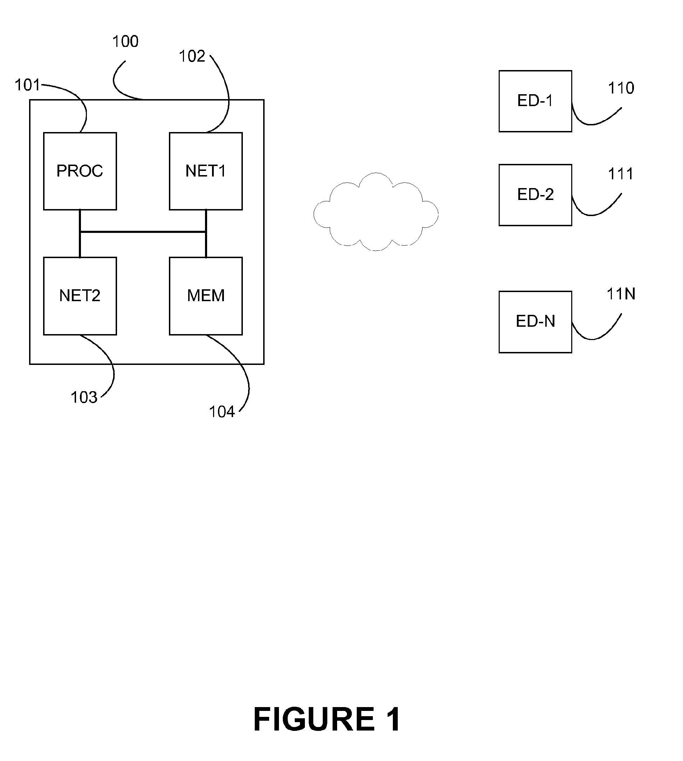

FIG. 1 is an exemplary system comprising a server 100 and electronic devices 110, 111 to 11 N according to one embodiment of present system.

In this embodiment, the server 100 is typically hosting one or several social network services. The server 100 comprises for example a processor 101, a first network module 102, possibly a second network module 103 and a memory or database module 104. The memory or database module 104 may store data or may be connected through the network module 102 or 103 to others database hosted on servers not represented here.

Several electronic devices 110, 111 to 11N are connected to the server 100, possibly through an internet connection 120. Such electronic devices 110, 111 to 11N can be for example computers, tablets or smartphones.

A user of one of the electronic devices 110, 111 to 11N may access one social network hosted by the server 100 via an web interface using a web browser on the electronic device. Alternatively, a dedicated application may be installed on the electronic device to connect to the social network. Such application may be for example downloaded from an application market such as Play™ or Itunes™ or pre-installed on the electronic device 110, 111 to 11N.

The processor 101 of the server 100 may execute a computer program implementing the method of present system. The method of present system may be executed by the processor 101 or may be executed also partially by others modules of the server 100 not represented in FIG. 1. Thus, the sever 100 may comprise modules dedicated for some calculation like calculating a voice signature from an audio content or voice recognition. The server 100 may then comprise modules for text-to-speech (speech synthesis) or speech-to-text calculation (voice recognition module).

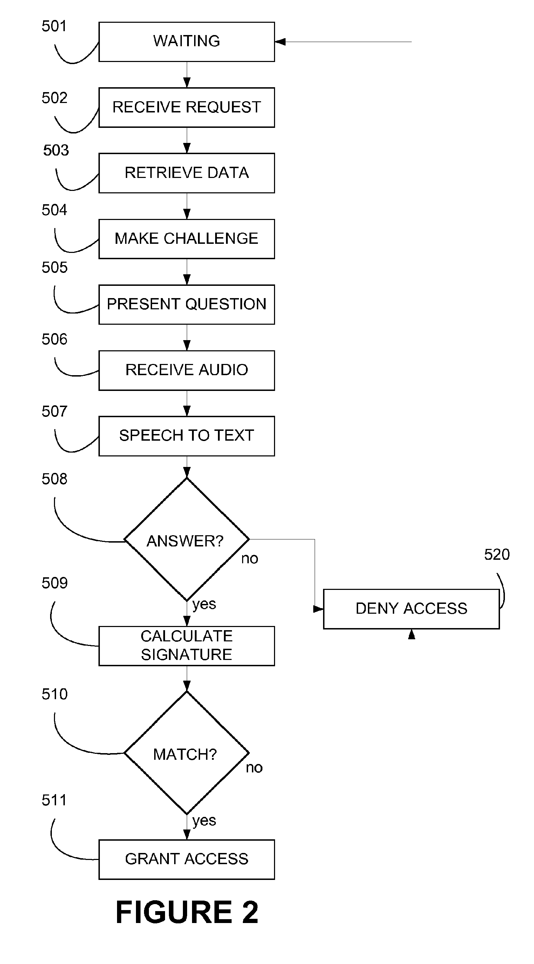

FIG. 2 show an exemplary embodiment of present system using a two or three factor based authentication.

The flowchart of FIG. 2 illustrates the method for authenticating a first user request to access a social network on a server like server 100 from an electronic device like electronic device 110, 111 to 11N. For exemplary illustration, the first user shall be using the electronic device 110. The first user has previously created an ID and a user profile on the social network. The first user has also posted or shared some information on the social network and shall have possibly indicated a list of connected users, like friends, family members, business relations, etc.

Step 501 represents the waiting stage for the server 100. At this stage, the first user is not connected to the social network.

In step 502, the server receives from the electronic device 110 a request to access the social network, the request comprising the ID of the first user. Indeed, either via a web interface or via a dedicated application, the first user launches a connection to the social network by indicating its ID. For example, the first user may browse the website of the social network, enter its ID and press "login"'. Alternatively, the first user may configure a dedicated application by indicating its ID, and the dedicated application shall send automatically a request to access the social network comprising the first user ID to the server 100.

In step 503, the server 100 retrieves the first user profile and dynamic data associated to the received first user ID. As seen before, dynamic data is any data that is available to the first user when connected on the social network at a said time. Indeed, such dynamic data may evolve along the time, depending on what information is shared by the different users, with whom, etc.

For example, dynamic data comprise all the information shared with the first user by other users directly or indirectly connected with the first user (like "posts", "comments", photos, etc.). Dynamic data may also comprise information from user profiles, including information of the first user profile. Dynamic data comprise also indication of links or connection between users, possibly including some indication or tag. For example, the first user may be connected with a second user, and the connection may be tagged as "brother".

In step 503, the server 100 retrieves all dynamic data that are linked or associated with the first user, that is to say associated with the first user ID on the social network. Such dynamic data may comprise text (posted messages for example), photos, video, agenda entries, etc. The dynamic data may comprise data updated by the user. Such dynamic data include all messages posted by the first user on the social network, photos or video uploaded, updates of the first user profile, comments posted on other user messages. The dynamic data may also comprise data associated to any other user of the social network. Such dynamic data include any information posted by any second user on the social network that is accessible to the first user, either because the first user is connected to the second user - possibly through at least a third user - or because the second user shared the information publicly.

In step 504, the server 100 determines a challenge from the retrieved dynamic data, the challenge comprising a first and a second part. In other words, the server 100 creates, using the dynamic data, a challenge, the first part being a question, the second part being the answer to the question.

As the challenge is built from dynamic data, the challenge can be generated on demand, guarantying that the challenge is new and possibly different every time the first user connects to the social network. The number of different challenges that the server 100 can create may depend on the size of the available dynamic data associated to the first user and can be limited by others criteria. For example, it can be decided that no challenge shall be created using dynamic data older than one year or using dynamic data originating from a user of the social network not directly linked to the first user. Indeed, the first user shall be able to answer the question, and creating a challenge based on dynamic data posted five years ago by a user barely known by the first user may prove too challenging.

For example, using a photo posted the week-end before by a user connected to the first user, the photo being geographically tagged at a certain location, the server 100 may determine that the first part of the challenge is "where was this user last week-end?" and the second part of the challenge is the certain location.

In another example, using a conversation the first user had the day before with another user on the social network, the first part of the challenge can be "who did you have a chat with yesterday?" and the second part of the challenge can be the name of said user.

If the social network comprises the possibility of indicating relationship between users, a challenge may be built using such data. First part of the challenge can be "who is Jean-Michel in relationship with?", and the second part of the challenge is the user indicated as in relationship with Jean-Michel according to the social network.

In another example, the server 100 may choose several photos A, B and C from user profiles connected to the first user. The first part of the challenge can be "which photo shows Jean-Michel?", the corresponding answer being "photo A".

As a result, the server 100 can dynamically generate random challenges.

In the step 505, once the challenge has been determined in step 504, the server 100 presents the first part of the challenge to the first user. Such presentation can be done by any means. For example, if the first user attempts to access the social network via the social network webpage, the first user may first enter its ID at a login webpage rendered by its electronic device (corresponding to the step 502) and receive in response a webpage from the server 100, the webpage comprising the first part of the challenge determined in step 504.

The first user of the electronic device 110 shall be presented at the same time with an option to record an audio content. Indeed, the first user shall answer to the first part of the challenge, that is to say the question, by a voice message. In other words, the server 100 shall receive in step 506 the answer as an audio content. For example, the microphone of the electronic device 110 can be used by the first user to record its answer and then the first user can upload the audio content recorded to the server 100.A dedicated application for the social network may hide all this complexity to the first user. Indeed, such dedicated application, once the ID of the first user has been configured, can automatically send a request to access the social network to the server 100 comprising the first user ID, receive in return from the server 100 the first part of the challenge determined in step 503, display this first part of the challenge to the first user within the graphical user interface of the dedicated application and present an option for the first user to launch the recording of its answer. Then, the dedicated application sends the recorded answer as an audio content to the server 100.

Thus, in step 505, the server 100 receives an audio content corresponding to the answer to the first part of the challenge recorded by the first user.

In a step 506, the received audio content is decoded by the server 100. Such decoding is performed by a voice recognition system, either directly implemented on the processor 101 of the server 100 or, in order to reduce the processor 101 load, with the help of a voice recognition module of the server 100. The server 100 may also use any external voice recognition system, provided by another server or cloud service. The result of the decoding of the audio content is a text message, the text message being a transcription of the audio content.

In a step 507, the decoded transcription of the audio content is compared by the server 100 to the second part of the challenge. Such comparison can be literal, the decoded text and the second part of the challenge being compared as texts. In another embodiment, the decoded audio content and the second part of the challenge - that is to say the expected answer -, are compared phonetically. If the first part of the challenge is a multiple choice question, the server 100 may determine proximity between the decoded audio content and the several possible answers, and decide that the decoded audio content corresponds to the right answer according to the determined proximity.

When the audio content, decoded through the voice recognition system, corresponds to the second part of the challenge, the server 100 shall perform the step 508.

If the audio content, decoded through the voice recognition system, does not correspond to the second part of the challenge, the server 100, in the step 511, denies access to the first user to the social network. The first user shall then repeat its access request to try again to access the social network. The server 100 may present the same question again or generate a new question every time the first user tries to access the social network.

The server 100 may also renew the challenge depending on the elapsed time since last authentication request with the same ID. In a further embodiment, the server 100 may repeat the steps 504 to 508 more than one time in order to make it more difficult for someone trying to gain a fraudulent access. Thus, after an unsuccessful attempt to authenticate, a user may need to go through the process of answering to two or more questions instead of just one. This may also depend on other criteria like the electronic device 110 location, time of the day, etc.

If the received audio content, decoded through the voice recognition system, corresponds to the second part of the challenge, then, in a step 509, the server 100 calculates a voice signature of the audio content. Such voice signature of the audio content is calculated by the processor 101 or by a dedicated module for calculating voice signature, or a combination of both solutions. In another embodiment, the server 100 may rely on an external server for the calculation of the voice signature of the received audio content.

In a further step 510, the server 100 compares the voice signature associated with the first user ID with the voice signature of the received audio content. If the two voice signature corresponds, then the server 100 grants access to the first user to the social network. Otherwise, in a step 520, access is denied.

In the embodiment of the system previously described the server 100 first checks that the answer is correct by decoding the audio content, and only then checks that the voice signature corresponds to the right one.

In another embodiment, the server 100 may first check that the voice signature is correct before checking that the answer is correct.

In a further embodiment, the verification of the voice signature (steps 509 and 510) and the verification of the answer (steps 507 and 508) may be performed in parallel, for example as two sub processes. In this case, the server grants access to the first user (step 511) only if the two sub processes are successful, that is to say that both the voice signature of the audio content corresponds to the voice signature of the first user and the decoded audio content corresponds to the second part of the challenge.

When the two verification - answer and voice signature - are performed in parallel, an interaction may be defined between the two sub-processes. Indeed, for example, if the matching between the voice signature of the audio content and the voice signature of the first user is not perfect then, a second or more challenge may be presented to the first user. Thus, the number of challenges to be solved by the first user may depend on the matching between the voice signature of the first user and the voice signature of one or more of the audio contents received when answering the different challenges.

In a similar way, if the decoded audio content does not correspond exactly to the answer, then the matching of the two voice signatures may be more demanding. For example, if a challenge was built on the age of one user of the social network, the matching requirement of the voice signatures may depends on the error made on the age when answering the question.

Previously described embodiment of present system relies on a two factor authentication: knowledge factor ("something only the user knows", challenge) and inherence factor ("something only the user is", voice signature). In complementary embodiments of present system, a third possession factor ("something only the user has") may be added.

In a first complementary embodiment of the present system, the first user profile comprises an identifier of a channel, the first part of the challenge being presented to the user via the identified channel. The identifier of a channel is typically a phone number, a mail address, an IP address or any identifier that permits to somehow send a message to the first user on the electronic device 110, an electronic device registered by the first user on its user profile or an electronic device used by the first user. The identifier of a channel shall be registered in association with the first user profile for example during the creation of the first user profile. Thus, if the electronic device 110 is a smartphone, in step 505, the first part of the challenge may be sent to the electronic device 110 for example as a short message using identifier of a channel (that is to say here the phone number of the electronic device 100) instead of being presented on the social network webpage. Like that, only the first user, legitimate owner of the electronic device 110, can receive the first part of the challenge. No other user may then access the social network using the first user ID as the first part of the challenge is sent only to the first user. Moreover, the first user may then detect any illegitimate attempt to access the social network using its ID when receiving unrequested first parts of challenges. The network interface 103 can be adapted to communicate using the identifier of a channel. For example, the network interface 103 may be connected to a public switched telephone network.

In further complementary embodiment of the present system, the channel is a voice channel and a voice prompt to record the audio content is presented to the user after the presentation of the first part of the challenge. Thus, after receiving in step 502 a request to access the social network comprising the first user ID, the server 100 retrieves in the following step 503 an identifier of a channel associated with the received first user ID. Such identifier of a channel is typically a phone number associated to electronic device 110. Then, in step 505, the server 100, using for example the network interface 103, places a call to the phone number of the electronic device 110. The server 100 may use a text-to-speech module to present the first part of the challenge to the first user via the phone call. After the presentation of the first part of the challenge, the server 100 may present a voice prompt inviting the first user to record its answer. The answer is then directly recorded as an audio content by the server 100, replacing the step 506.

In an alternative embodiment of present system using a third authentication factor, the first user profile comprises an identifier of a channel and the method further comprises a step of checking that the audio content is received through the identified channel. In other words, the step 505 of presentation of the first part of the challenge is performed normally, but, when receiving the audio content in step 506, a further step is added to check that the audio content is received coming from a specific identifier of a channel.

Such identifier of a channel may be an e-mail address of the first user. In this case, the audio content shall be received in step 506 via said e-mail address. Otherwise, the audio content shall be rejected, aborting the authentication process (step 520). During the presentation step 505, an e-mail address for the server 100 shall be provided to the first user to be able to send the audio content.

The identifier of a channel may be a phone number, for example the phone number of electronic device 110. Thus, in a step 506, the first user may just need to place a call to a predefined phone number in order to answer vocally the first part of the challenge, providing directly the audio content to the server 100. The user may need to first enter or pronounce its ID before answering the first part of the challenge. Alternatively, the phone number to be called by the first user may be generated on demand by the server, possibly chosen among a pool of available phone numbers associated to the social network. In step 505, the server 100 can present the first part of the challenge and a specific phone number to be called by the first user to provide the answer, the call needing to be placed from the electronic device 110.

In other words, if the audio content is not received from a trusted identifier previously associated to the first user, the step next to the step 506 is step 520, and not step 507.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system for implementing the method described here before may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) the term "greater than" (respectively "lower than") should be understood as "strictly greater than" (resp. "strictly lower than") or "greater than or equal to" (resp. "lower than or equal to"), both implementation being possible unless specifically indicated.

## Claims

1. A method for authenticating a user request to access a resource on a server from an electronic device, the user being identified by an ID, a user profile and dynamic data being associated to the ID, the user profile comprising a voice signature, the method being executed by the server and comprising the steps of:
- receiving from an electronic device a request to access the resource, the request comprising the ID,
- retrieving the user profile and dynamic data associated to the received ID,
- determining a challenge from the retrieved dynamic data, the challenge comprising a first and a second part,
- presenting the first part of the challenge to the user,
- receiving an audio content,
and when a voice signature of the audio content corresponds to the voice signature of the retrieved user profile, and,
when the audio content, decoded through a voice recognition system, corresponds to the second part of the challenge,
- granting access to the resource.

2. The method according to previous claim, the dynamic data comprising data updated by the user.

3. The method according to any previous claim, the dynamic data comprising data associated to at least a second user of the resource.

4. The method according to any previous claim, the user profile comprising an identifier of a channel, the first part of the challenge being presented to the user via the identified channel.

5. The method according to previous claim, the channel being a voice channel, a voice prompt to record the audio content being presented to the user after the presentation of the first part of the challenge.

6. The method according to any claim 1 to 4, the user profile comprising an identifier of a channel, the method further comprising a step of checking that the audio content is received through the identified channel.

7. A server hosting a resource and connected to at least one electronic device, the server comprising means for:
- receiving from the at least one electronic device a request to access the resource, the request comprising an ID,
- retrieving dynamic data and a user profile, comprising a voice signature, associated to the received ID,
- determining a challenge from the retrieved dynamic data, the challenge comprising a first and a second part,
- presenting the first part of the challenge,
- receiving an audio content,
- calculating a voice signature of the received audio content,
- comparing the voice signature of the received audio with the voice signature of the retrieved user profile,
- decoding the received audio content,
- comparing the decoded audio content with the second part of the challenge,
- and, depending on the two previous comparison, granting access to the resource.

8. An application program embodied on a non-transitory computer readable medium and arranged to execute the method of claims 1 to 6.
